# EUROPEAN PATENT APPLICATION

(11) **EP 3 010 158 A1**
(43) Date of publication of application: **20.04.2016**
(21) Application number: 15189590.1
(22) Date of filing: 13.10.2015
(51) Int. Cl.: H04B 7/04, H04B 7/06

(54) **METHOD AND APPARATUS FOR BEAM TRACKING IN A WIRELESS COMMUNICATION SYSTEM**

(30) Priority: 14.10.2014 US 201462063616 P; 28.09.2015 US 201514867475
(71) Applicant: ASUSTeK Computer Inc., Peitou, Taipei (TW)
(72) Inventor: KUO, Richard Lee-Chee, 112 Peitou Dist., Taipei City (TW)
(74) Representative: Hoefer & Partner Patentanwälte mbB

(57) **Abstract**

A method and apparatus are disclosed for updating a beam set of a UE (User Equipment) in a cell of a wireless communication system, wherein a base station applies beam-forming for transmission and/or reception in the cell and there are at least two beams in the cell. In one embodiment, the method includes the base station determining the beam set of the UE. The method also includes the base station monitoring an uplink transmission from the UE via the beam set. The method further includes the base station sending a signaling to the UE for triggering at least an aperiodic reference signal transmission if no DM RS associated with the uplink transmission is detected via at least one beam in the beam set. In addition, the method includes the base station updating the beam set according to at least a beam or beams via which the aperiodic reference signal is received from the UE.

## Description

### CROSS-REFERENCE TO RELATED APPLICATIONS

The present Application claims the benefit of U.S. Provisional Patent Application Serial No. 62/063,616 filed on October 14, 2014, the entire disclosure of which is incorporated herein by reference.

### FIELD

This disclosure generally relates to wireless communication networks, and more particularly, to a method and apparatus for beam tracking in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

A method and apparatus are disclosed for updating a beam set of a UE (User Equipment) in a cell of a wireless communication system, wherein a base station applies beam-forming for transmission and/or reception in the cell and there are at least two beams in the cell. In one embodiment, the method includes the base station determines the beam set of the UE. The method also includes the base station monitors an uplink transmission from the UE via the beam set. The method further includes the base station sends a signaling to the UE for triggering at least an aperiodic reference signal transmission if no DM RS (De-Modulation Reference Signal) associated with the uplink transmission is detected via at least one beam in the beam set. In addition, the method includes the base station updates the beam set according to at least a beam or beams via which the aperiodic reference signal is received from the UE.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a diagram according to one exemplary embodiment.
FIG. 6 is a flow chart according to one exemplary embodiment.
FIG. 7 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: TS 36.300 V12.2.0, "E-UTRA and E-UTRAN Overall description"; TS 36.331 V11.4.0 "E-UTRA RRC protocol specification"; and TS 36.213 V11.4.0 "E-UTRA Physical layer procedures". The standards and documents listed above are hereby expressly incorporated by reference in their entirety.

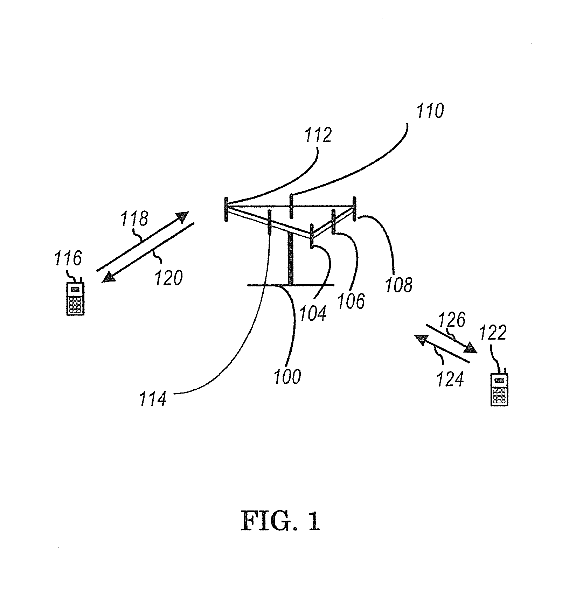

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

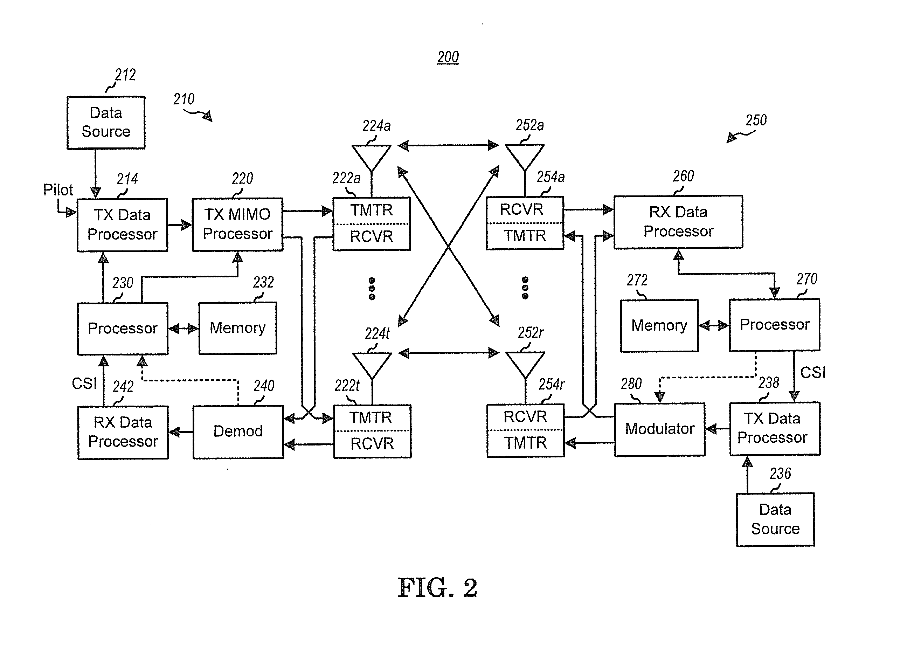

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

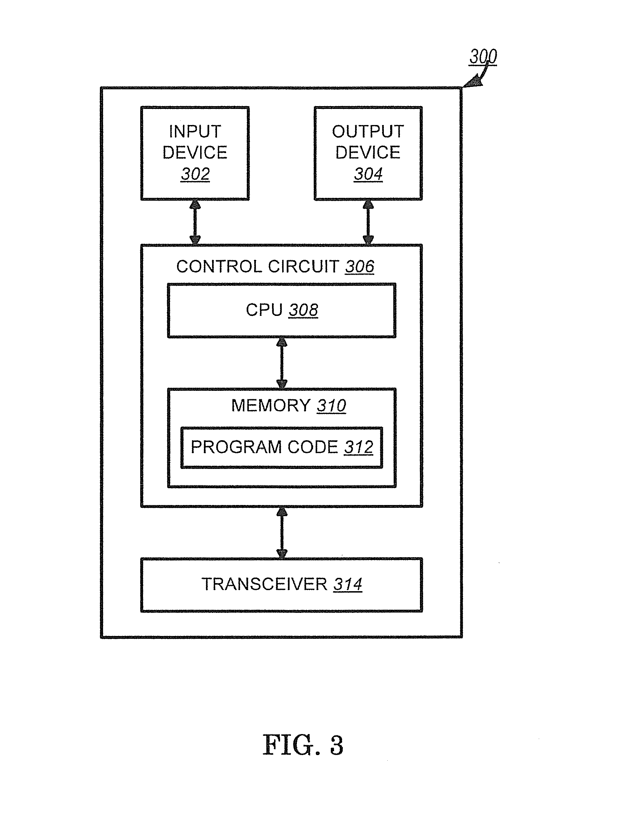

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

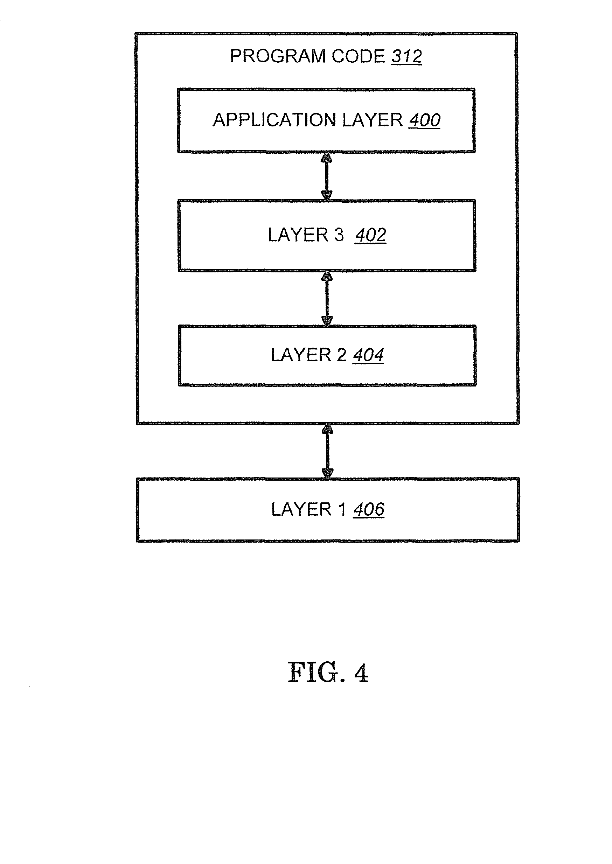

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

Beam forming is generally a signal processing technique used in antenna arrays for directional signal transmission or reception. This is achieved by combining elements in a phased array in such a way that signals at particular angles experience constructive interference while others experience destructive interference. Beam forming can be used at both the transmitting and receiving ends in order to achieve spatial selectivity. The improvement compared with omnidirectional reception/transmission is known as the receive/transmit gain.

Beam forming is frequently applied in radar systems. The beam created by a phased array radar is relatively narrow and highly agile compared to a moving dish. This characteristic gives the radar the ability to detect small and fast targets such as ballistic missiles in addition to aircrafts.

The benefit of co-channel interference reduction also makes beam forming attractive to a mobile communication system designer. U.S. Patent Publication No. 2010/0165914 (entitled "Beam Division Multiple Access System and Method for Mobile Communication System" - the "'914 Publication") discloses the concept of beam division multiple access (BDMA) based on beam forming technique. In BDMA, a base station can communicate with a mobile device via a narrow beam to obtain the receive/transmit gain. Furthermore, two mobile devices in different beams can share the same radio resources at the same time, and thus the capacity of a mobile communication system can increase greatly. To achieve that, the base station should know in which beam a mobile device is located.

To find which beam a mobile device is located in, the '914 Publication proposed in that a mobile device transmits its position and speed to a base station and then the base station determines the direction of a downlink beam for the mobile device according to the received position and speed. However, typically not all mobile devices in a cell are equipped with positioning capability (e.g., low end devices). As a result, the benefit of BDMA cannot be enjoyed if there are many low end devices in a cell. Another way for a base station to determine which beam a mobile device is located in could and should be considered.

A potential beam pattern applied by a base station for transmission and/or reception in a cell could be fixed. That is the number of beams and the widths of beams in a cell are fixed. In this situation, the base station could determine a beam set used by a mobile device by monitoring an uplink signal transmitted from the mobile device. Multiple beams may be used by a mobile device (e.g., due to multiple propagation paths or overlapping between two neighboring beams).

In a LTE mobile communication system, a user equipment (UE) performs a random access procedure during initial access to a mobile network. Thus, an eNB could determine the initial beam set used by the UE by monitoring an uplink signal transmitted from the UE during a random access (RA) procedure. After the initial beam set of the UE is determined, the eNB could then update the beam set based on any uplink signals transmitted by the UE periodically, such as sounding reference signals (SRSs), as discussed in 3GPP TS 36.213, which are transmitted by the UE periodically for channel estimation in the LTE mobile communication system. Other UE specific reference signals instead of SRS could be used for beam set determination.

In principle, a base station would schedule resources to UEs based on the beam set of each UE if beam-forming is applied in a cell. The same resources could be shared by two UEs if their beam sets do not overlap with each other. Thus, it is quite important to make sure the beam sets are correct. Otherwise, transmission to or reception from a UE with a wrong beam set might fail, resulting in degraded resource efficiency.

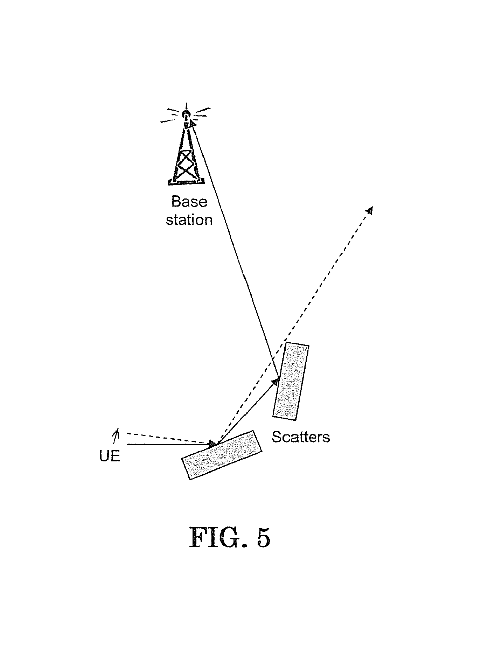

The beam set of a UE may change in the following cases:
(1) UE crosses beam boundaries. UEs near a base station may cross beam boundaries more frequently.
(2) A propagation path may disappear due to being blocked by a building or a moving object (e.g., a truck).
(3) A propagation path may disappear due to change of the incidence angle toward a scatter as shown in FIG. 5, which illustrates a propagation path change due to UE movement. As illustrated in FIG. 5, the dotted path cannot reach the base station.

In view of the above cases, the time when the beam set of a UE may change is unpredictable.

According to 3GPP TS 36.213, potential values of SRS periodicity in LTE include 2, 5, 10, 20, 40, 80, 160, and 320 ms. If SRS is used for beam tracking, it is expected that small SRS periodicities would need to be configured to UEs so as to ensure the beam sets can be updated in time. This would increase UE power consumption unfavorably.

Thus, it should be beneficial to introduce a mechanism for the base station to detect the potential beam set change so that the base station could take action to correct the beam set as soon as possible. This way the base station could avoid having to always configure small SRS periodicities to UEs.

In a LTE mobile communication system, a UE transmits demodulation reference signals (DM RSs) associated with PUSCH or PUCCH transmission for coherent demodulation (as discussed in 3GPP TS 36.213). Under the circumstances, one potential mechanism is that the base station considers a beam set change occurs if no DM RS (De-Modulation Reference Signal) associated with an uplink transmission is detected via at least one beam in the current beam set of the UE. The base station would then trigger an aperiodic SRS to the UE via a physical layer signaling (e.g., a PDCCH - "Physical Downlink Control Channel") so that the base station could update the beam set according to a beam or beams via which the aperiodic SRS is received from the UE.

Alternatively, it would also be feasible for the base station to use the uplink transmission (transmitted on a PUCCH ("Physical Uplink Control Channel") or PUSCH ("Physical Uplink Shared Channel")) instead of DM RS to detect the beam set change and then trigger the aperiodic SRS to the UE for beam set update. In addition, other types of aperiodic reference signal could also be used instead of the aperiodic SRS.

With this mechanism, correctness of a UE beam set could be checked every TTI (Transmission Time Interval) or TTI subframe during a data transfer session. The beam set can be updated once it changes.

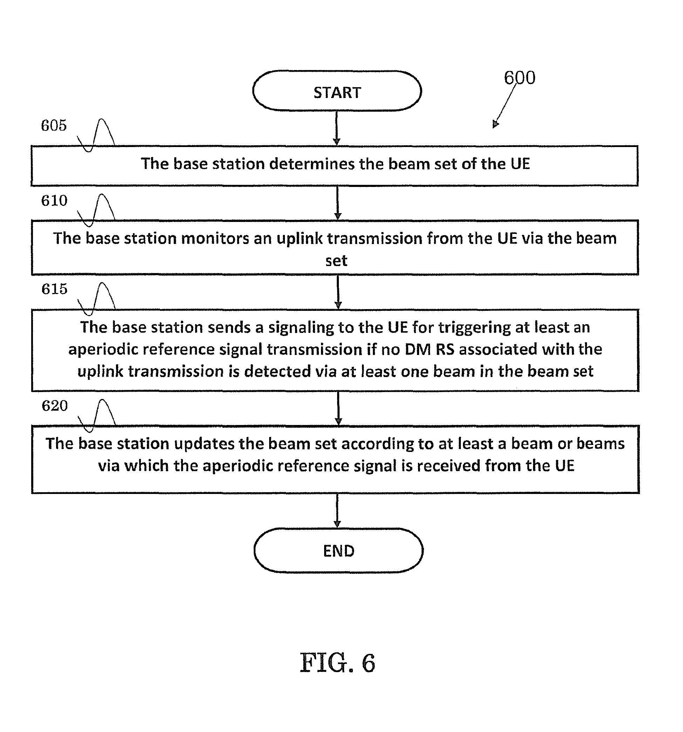

FIG. 6 illustrates a flow chart 600 from the perspective of a base station in accordance with one exemplary embodiment. In general, FIG. 6 illustrates a method for updating a beam set of a UE (User Equipment) in a cell of a wireless communication system, wherein a base station applies beam-forming for transmission and/or reception in the cell and there are at least two beams in the cell. In step 605, the base station determines the beam set of the UE. In step 610, the base station monitors an uplink transmission from the UE via the beam set. In one embodiment, the uplink transmission is a transmission on a PUCCH (Physical Uplink Control Channel) or PUSCH (Physical Uplink Shared Channel).

In step 615, the base station sends a signaling to the UE for triggering at least an aperiodic reference signal transmission if no DM RS (De-Modulation Reference Signal) associated with the uplink transmission is detected via at least one beam in the beam set. In one embodiment, the signaling to the UE is transmitted on a PDCCH (Physical Downlink Control Channel). Furthermore, the signaling to the UE could be a physical layer signaling. In one embodiment, the aperiodic reference signal is a sounding reference signal (SRS). In one embodiment, the DM RS is transmitted for coherent demodulation.

In step 620, the base station updates the beam set according to at least a beam or beams via which the aperiodic reference signal is received from the UE.

Referring back to FIGS. 3 and 4, in one embodiment from the perspective of a base station, the device 300 includes a program code 312 stored in memory 310 to apply beam-forming for transmission and/or reception in the cell and there are at least two beams in the cell. The CPU 308 could execute program code 312 (i) to determine the beam set of the UE, (ii) to monitor an uplink transmission from the UE via the beam set, (iii) to send a signaling to the UE for triggering at least an aperiodic reference signal transmission if no DM RS associated with the uplink transmission is detected via at least one beam in the beam set, and (iv) to update the beam set according to at least a beam or beams via which the aperiodic reference signal is received from the UE. In addition, the CPU 308 can execute the program code 312 to perform all of the above-described actions and steps or others described herein.

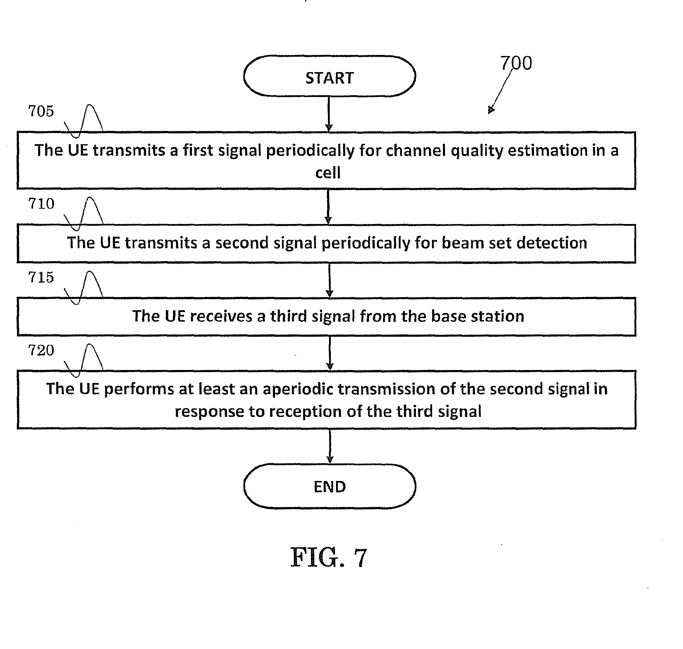

FIG. 7 is a flow chart 700 from the perspective of a UE node in accordance with one exemplary embodiment. In general, FIG. 7 illustrates a method for transmitting signal for beam set detection by a UE in a cell of a wireless communication system, wherein beam-forming is applied for transmission and/or reception in the cell and there are at least two beams in the cell. In step 705, the UE transmits a first signal periodically for channel quality estimation in a cell. In one embodiment, the first signal is a SRS.

In step 710, the UE transmits a second signal periodically for beam set detection. In one embodiment, the second signal is a reference signal different from a SRS.

In step 715, the UE receives a third signal from the base station. In one embodiment, the third signal is transmitted on a PDCCH. Furthermore, the third signal could be a physical layer signaling. In step 720, the UE performs at least an aperiodic transmission of the second signal in response to reception of the third signal.

Referring back to FIGS. 3 and 4, in one embodiment from the perspective of a UE, the device 300 includes a program code 312 stored in memory 310. The CPU 308 could execute program code 312 (i) to transmit a first signal periodically for channel quality estimation in a cell, (ii) to transmit a second signal periodically for beam set detection, (iii) to receive a third signal from the base station, and (iv) to perform at least an aperiodic transmission of the second signal in response to reception of the third signal. In addition, the CPU 308 can execute the program code 312 to perform all of the above-described actions and steps or others described herein.

Based on the various embodiments described above, a mechanism for the base station to detect the potential beam set change so that the base station can take action to correct the beam set as soon as possible is proposed.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for updating a beam set of a User Equipment (116, 122), named "UE" hereinafter, in a cell of a wireless communication system, wherein a base station (100) applies beam-forming for transmission and/or reception in the cell and there are at least two beams in the cell, comprising:
the base station (100) determines the beam set of the UE (116, 122);
the base station (100) monitors an uplink transmission from the UE (116, 122) via the beam set;
the base station (100) sends a signaling to the UE (116, 122) for triggering at least an aperiodic reference signal transmission if no De-Modulation Reference Signal, named "DM RS" hereinafter, associated with the uplink transmission is detected via at least one beam in the beam set; and
the base station (100) updates the beam set according to at least a beam or beams via which the aperiodic reference signal is received from the UE (116, 122).

2. The method of claim 1, wherein the uplink transmission is a transmission on a Physical Uplink Control Channel, named "PUCCH", or Physical Uplink Shared Channel, named "PUSCH".

3. The method of claim 1, wherein the signaling to the UE (116, 122) is transmitted on a Physical Downlink Control Channel, named "PDCCH".

4. The method of claim 1, wherein the signaling to the UE (116, 122) is a physical layer signaling.

5. The method of claim 1, wherein the DM RS is transmitted for coherent demodulation.

6. The method of claim 1, wherein the aperiodic reference signal is a sounding reference signal, named "SRS".

7. A base station (100) for updating a beam set of a User Equipment (116, 122), named "UE" hereinafter, in a cell of a wireless communication system, wherein the base station (100) applies beam-forming for transmission and/or reception in the cell and there are at least two beams in the cell, the base station (100) comprising:
a control circuit;
a processor installed in the control circuit; and
a memory installed in the control circuit and operatively coupled to the processor;
wherein the processor is configured to execute a program code stored in the memory to:
determine the beam set of the UE (116, 122);
monitor an uplink transmission from the UE (116, 122) via the beam set;
send a signaling to the UE (116, 122) for triggering at least an aperiodic reference signal transmission if no De-Modulation Reference Signal, named "DM RS" hereinafter, associated with the uplink transmission is detected via at least one beam in the beam set; and
update the beam set according to at least a beam or beams via which the aperiodic reference signal is received from the UE (116, 122).

8. The base station of claim 7,
• wherein the uplink transmission is a transmission on a Physical Uplink Control Channel, named "PUCCH" or Physical Uplink Shared Channel, named "PUSCH", and/or
• wherein the signaling to the UE (116, 122) is transmitted on a Physical Downlink Control Channel, named "PDCCH", and/or
• wherein the signaling to the UE (116, 122) is a physical layer signaling, and/or
• wherein the DM RS is transmitted for coherent demodulation, and/or
• wherein the aperiodic reference signal is a sounding reference signal, named "SRS".

9. A method for transmitting signal for beam set detection by a User Equipment (116, 122), named "UE" hereinafter, in a cell of a wireless communication system, wherein beam-forming is applied for transmission and/or reception in the cell and there are at least two beams in the cell, comprising:
the UE (116, 122) transmits a first signal periodically for channel quality estimation in a cell;
the UE (116, 122) transmits a second signal periodically for beam set detection;
the UE (116, 122) receives a third signal from the base station (100); and
the UE (116, 122) performs at least an aperiodic transmission of the second signal in response to reception of the third signal.

10. The method of claim 9, wherein the first signal is a sounding reference signal, named "SRS".

11. The method of claim 9, wherein the second signal is a reference signal different from a sounding reference signal, named "SRS".

12. The method of claim 9, wherein the third signal is transmitted on a Physical Downlink Control Channel, named "PDCCH" or is a physical layer signaling.

13. A User Equipment (116, 122), named "UE" hereinafter, in a cell of a wireless communication system, wherein beam-forming is applied for transmission and/or reception in the cell and there are at least two beams in the cell, the UE (116, 122) comprising:
a control circuit (306);
a processor (308) installed in the control circuit (306); and
a memory (310) installed in the control circuit (306) and operatively coupled to the processor (308);
wherein the processor (308) is configured to execute a program code stored in the memory (310) to:
transmit a first signal periodically for channel quality estimation in a cell;
transmit a second signal periodically for beam set detection;
receive a third signal from the base station (100); and
perform at least an aperiodic transmission of the second signal in response to reception of the third signal.

14. The UE (116, 122) of claim 13,
• wherein the first signal is a sounding reference signal, named "SRS", or
• wherein the second signal is a reference signal different from a sounding reference signal, named "SRS".

15. The UE of claim 13, wherein the third signal is transmitted on a Physical Downlink Control Channel, named "PDCCH", or is a physical layer signaling.
